# EUROPEAN PATENT APPLICATION

(11) **EP 3 427 868 A1**
(43) Date of publication of application: **16.01.2019**
(21) Application number: 18181741.2
(22) Date of filing: 04.07.2018
(51) Int. Cl.: B22F 3/105

(54) **ADDITIVELY MANUFACTURED ARTICLE INCLUDING ELECTRICALLY REMOVABLE SUPPORTS**

(30) Priority: 11.07.2017 US 201715646221
(71) Applicant: United Technologies Corporation, Farmington, CT 06032 (US)
(72) Inventor: O'NEILL, Christopher F., Hebron, CT Connecticut 06248 (US); BOYER, Jesse R., Middletown, CT Connecticut 06457 (US)
(74) Representative: Dehns

(57) **Abstract**

An additively manufactured element (120) includes a support structure (124, 224, 324) connected to an article body (121, 221, 321). The connectors connecting the support structure (124, 224, 324) to the article body (121, 221, 321) are fused supports (122, 222, 322). Also disclosed is a method (400) for removing the support structure (124, 224, 324) from the article body (121, 221, 321) bypassing an electrical current through the fused supports (122, 222, 322), thereby breaking the fused supports (122, 222, 322).

## Description

### TECHNICAL FIELD

The present disclosure relates generally to additive manufacturing processes, and more specifically to a method and process for removing supports from an additively manufactured article.

### BACKGROUND

Additive manufacturing systems operate by iteratively creating a part, or other component body, using multiple stacked layers. As the layers are stacked, the varied geometry of each layer required to generate the desired end geometry can create large thermal gradients which need to be managed and can cause various challenges during the manufacturing process.

To prevent the part from experiencing thermal distortion, unacceptable surface roughness, build failures, affecting material properties, and decoupling from the build substrate, some processes construct a support structure adjacent to, and simultaneous with, the part. The support structure is connected to the part via one or more supports. In this way, the support structure maintains the position of the part throughout the manufacturing process.

As the support, and the support structures are not components of the final part, a secondary finishing process is used to remove the support from the additively manufactured part. The removal involves physically snipping, tearing, machining, or otherwise breaking the supports connecting the support structure to the part. Once all the supports have been disconnected, the support structure is removed, and further finishing processes can be applied to remove any additional artifacts from the part.

The removal of the support structure is time consuming, potentially costly, and can require substantial physical effort depending on the type of material used in the additive manufacturing process.

### SUMMARY OF THE INVENTION

In one exemplary embodiment an additively manufactured element includes a support structure and an article body connected to the support structure via a plurality of fused supports.

In another example of the above described additively manufactured element the plurality of fused supports form a castellated connection to the support structure.

In another example of any of the above described additively manufactured elements each of the fused supports has a first cross sectional area at a connection to the component body and a second cross sectional area at a connection to the support structure, and wherein the second cross sectional area is larger than the first cross sectional area.

In another example of any of the above described additively manufactured elements each of the fused supports is under a spring tension.

In another example of any of the above described additively manufactured elements the article body, support structure, and fuse element are comprised of an electrically conductive material.

In another example of any of the above described additively manufactured elements the component body, support structure, and fused supports comprise a metal material.

In another example of any of the above described additively manufactured elements the fused supports have a higher resistivity than the component body.

In another example of any of the above described additively manufactured elements each of the fused supports in the plurality of fused supports has a higher resistivity than the support structure.

In another example of any of the above described additively manufactured elements at least one of the fused supports in the plurality of fused supports further comprise an additional material, relative to the support structure and the article body.

In another example of any of the above described additively manufactured elements the additional material increases the resistivity of the at least one fused support.

An exemplary method for removing an additively manufactured part from a support structure includes passing an electrical current through an additively manufactured structure, thereby destroying a plurality of connectors connecting a support portion of the additively manufactured structure to a part portion of the additively manufactured structure.

In another example of the above described exemplary method for removing an additively manufactured part from a support structure passing the electrical current through the additively manufactured structure, comprises contacting the support structure with a first electrode while the part portion is contacting a neutral/ground.

Another example of any of the above described exemplary methods for removing an additively manufactured part from a support structure further includes maintaining the current for a duration, the duration being at least a length of time required to ensure breakage of the plurality of connectors.

Another example of any of the above described exemplary methods for removing an additively manufactured part from a support structure further includes applying pressure to at least one of the support portion and the part portion.

In another example of any of the above described exemplary methods for removing an additively manufactured part from a support structure the pressure is applied simultaneous to passing the electrical current through the additively manufactured structure.

Another example of any of the above described exemplary methods for removing an additively manufactured part from a support structure further includes additively manufacturing the additively manufactured structure by simultaneously manufacturing the support portion, the part portion and the connectors, and wherein the connectors are a fused structure.

In another example of any of the above described exemplary methods for removing an additively manufactured part from a support structure manufacturing the connectors comprises manufacturing a region of each connector narrower than a remainder of the connector.

In another example of any of the above described exemplary methods for removing an additively manufactured part from a support structure the region is at a joint between the connector and the part portion.

These and other features of the present invention can be best understood from the following specification and drawings, the following of which is a brief description.

### BRIEF DESCRIPTION OF THE DRAWINGS

Figure 1 schematically illustrates an exemplary additive manufacturing system.
Figure 2 schematically illustrates a partial view of an additively manufactured article and support.
Figure 3A schematically illustrates a support connection between an additively manufactured article body and a corresponding support.
Figure 3B schematically illustrates the support connection of Figure 3A after exposure to an electrical current.
Figure 4 illustrates a method for removing a support structure from an additively manufactured article.

### DETAILED DESCRIPTION OF AN EMBODIMENT

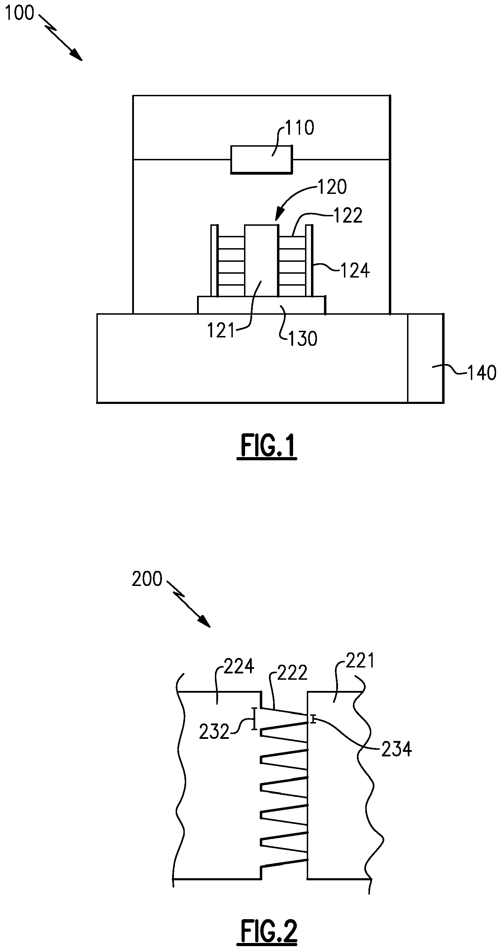

Figure 1 schematically illustrates an exemplary additive manufacturing system 100. The exemplary additive manufacturing system 100 is a powder bed based additive manufacturing system, such as an electron beam additive manufacturing system or a laser based additive manufacturing system, and is configured to manufacture an article 120 according to any known additive manufacturing technique. Included within the additive manufacturing system 100 is a heat source 110 disposed above a powder bed 130. The additively manufactured article 120 is created on the powder bed 130. A controller 140 is connected to the additive manufacturing system 100 and controls the operations of the system 100. In alternative examples, the system 100 is controlled via a remote controller, such as a personal computer, using a wired or wireless connection.

The additively manufactured article 120 includes an article body 121 connected to a support structure 124 via multiple additively manufactured supports 122. The supports 122 are potentially arranged in a castellated structure and are, in some examples, under a spring tension. The support structure 124 and the supports 122 are constructed simultaneously with, and integral to, the article body 121 and help maintain the article body 121 in a properly oriented position during the manufacturing process. In some examples, the supports 122, support structure 124, and body 121 are all comprised of the same material. In other examples, where the additive manufacturing system supports simultaneously manufacturing with multiple distinct materials, the supports 122 can include additional materials referred to as additives that increase the electrical resistivity of the supports 122 relative to a remainder of the additively manufactured article 120. Once the article body 121 has been completely constructed, the additively manufactured article 120 is removed from the additive manufacturing system 100 for removal of the support structure 124. In alternative examples, the additive manufacturing system 100 can be configured such that one or more steps of the support structure 124 removal can be performed within the system 100.

As the support structure 124 and the supports 122 are, in some examples, not components of the end product, after completion of the additively manufactured article 120 the supports 122 are disconnected from the article body 121 using mechanical means, such as snipping or tearing of the supports 122, and the support structure 124 is removed from the article body 121. Any remaining artifacts of the supports 122 are removed via finishing processes such as chemical cleaning, polishing, sanding, and the like.

In some examples, such as when the additively manufactured article 120 is a metallic or otherwise conductive material, removal of the supports 122 from the article body 121 can be difficult due to the high strength of the material.

With further reference to Figure 1, Figure 2 schematically illustrates a partial view of an additively manufactured article 200, such as the additively manufactured article 120 of Figure 1. The additively manufactured article 200 includes an article body 221 connected to a support structure 224 via multiple supports 222. Each of the supports 222 has a first height 232 at a joint between the support 222 and the support structure 224, and a second height 234 at the joint between the support 222 and the article body 221. The second height 234 is smaller than the first height 232, resulting in a region of the support 222 that has a smaller cross section, relative to a remainder of the support 222. While illustrated as varied heights, one of skill in the art will appreciate that the variance can be applied to any cross sectional dimension, or to multiple cross sectional dimensions, provided the resultant structure has a discrete portion of the support 222 with a smaller cross section than a remainder of the support 222. Further, while illustrated in the exemplary embodiment as a gradual transition from a large cross section to a smaller cross section, the transition need not be gradual in nature, and can be achieved using one or more step structures.

When the material from which the additively manufactured article 200 is created is electrically conductive in nature, such as with a metal material, the resistivity of the support 222 is substantially higher at the portion with the smallest cross section than in a remainder of the support 222. As such, application of a sufficient magnitude of electrical current through the supports 222 will cause the supports 222 to break at the narrower region. In this respect, each of the supports 222 acts in the same manner as an electrical fuse, and the supports 222 are referred to as having a "fused structure". The magnitude of electrical current required to break the support 222 is referred to as the "fuse value" of the support 222, and can be determined by one of skill in the art using any known means including empirical testing and theoretical calculations. Electrical current can be applied to the supports 222 by connecting the article body 221 to a neutral node, alternatively referred to as a ground node or a return node. An electrode is then connected to the support structure 224 and a power source, causing current to travel from the support structure 224 to the article body 221 through the supports 222.

When a sustained electrical current in excess of the fuse value is applied to the support structure 224, and the article body 221 is connected to the neutral node, the electrical current passes through the supports 222 and returns to the neutral node. Due to the narrower region creating the fused structure, the sustained electrical current causes each support 222 to break at the narrowest portion of the support 222. Variations in the materials, as well as a position of the live node contacting the support structure 224, can cause a delay between the time when the first support 222 breaks and the time when the last support 222 breaks. Thus, the electrical current is sustained for a sufficient time to break all of the supports 222. The length of time required can be determined by one of skill in the art via any conventional means.

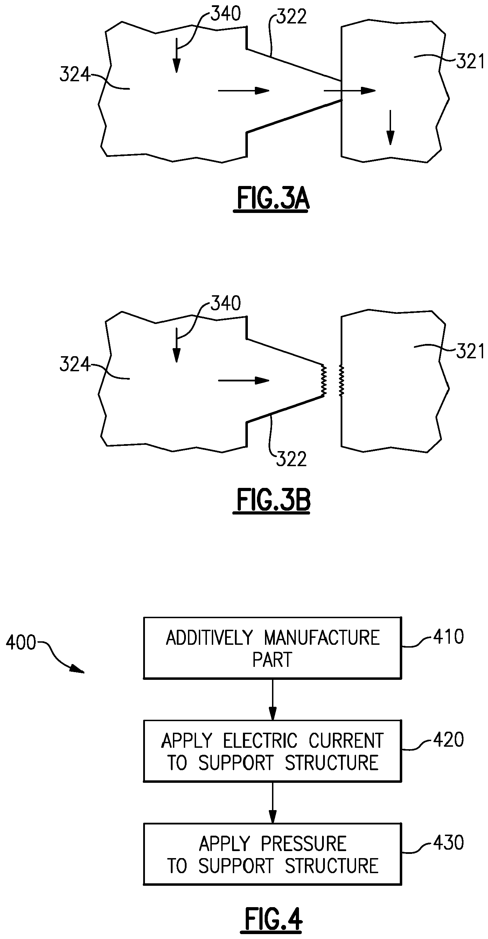

With continued reference to Figure 2, Figures 3A and 3B illustrate an individual support 322, including an electrical flowpath 340 from a support structure 324 to an article body 321, with Figure 3A illustrating the support 322 upon initial application of the electrical current, and Figure 3B illustrating the support 322 after the current has been sustained for a sufficient time period for all of the supports 322 to break.

With reference again to Figure 2, while application of the electrical current will cause each of the supports 222 to break due to the fused structure, the breakage alone is not sufficient to remove the support structure 224 from the article body 221. In addition to the electrical current, pressure is applied to the support structure 224 and/or the article body 221 in a direction approximately normal to the direction of the supports 222. When pressure is applied to both the support structure 224 and the article body 221, the pressure on each is applied in opposite directions. As a result of the applied pressure, and the broken supports 222, the support structure 224 is removed from the article body 221.

After removal, the article body 221 is subjected to finishing processes such as machining, polishing, sanding, washing, and the like, to ensure that any artifacts of the additive manufacturing process are removed, and the resultant article body 221 is within specification tolerances for dimensions, surface roughness, and the like.

With continued reference to Figures 1-3B, Figure 4 provides a flowchart 400 illustrating the method for removal of the support structure 124, 224, 324 from the article body 121, 221, 321. Initially, the article body 121, 221, 321 is additively manufactured along with the support structure 124, 224, 324 and the supports 122, 222, 322 in an "Additively Manufacture Part" step 410. Once the additively manufactured article 120, 200 is completed, the article body 121, 221, 321 is connected to a neutral node, and an electrode is brought into contact with the support structure 124, 224, 324. The contact causes an electrical current to be passed through the additively manufactured article 120 in an "Apply Electric Current to Support Structure" step 420.

In one example, the electric current is a DC current in excess of the fuse value of the highest fuse value support 122, 222, 322, thereby causing each of the supports 122, 222, 322 to break as described above. In some examples, the applied DC current is further in excess of a value higher than the highest fuse value in order to account for manufacturing variance. Once the electric current has been sustained for a sufficient time for each support 122, 222, 322 to break, pressure is applied to at least one of the support structure 124, 224, 324 and the article body 121, 221, 321 causing the support structure 124, 224, 324 to be removed from the article body 121, 221, 321 in an "Apply Pressure to Support Structure" step 430.

By utilizing the electrical current to break the supports 122, 222, 322 as described herein, the time, and physical effort required to separate the support structure 124, 224, 324 from the article body 121, 221, 321.

In yet further examples, the application of the DC current and the application of pressure to the support structure 124, 224, 324 can be timed and synchronized, with the specific time of the current application and the magnitude / time of the pressure being applied to the support structure being dependent upon the size of the supports 122, 222, 322 and the voltage of the DC current.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. An additively manufactured element (120) comprising:
a support structure (124, 224, 324); and
an article body (121, 221, 321) connected to the support structure (124, 224, 324) via a plurality of fused supports (122, 222, 322).

2. The additively manufactured element of claim 1, wherein the plurality of fused supports (122, 222, 322) form a castellated connection to the support structure (124, 224, 324).

3. The additively manufactured element of claim 1 or 2, wherein each of said fused supports (122, 222, 322) has a first cross sectional area at a connection to the article body (121, 221, 321) and a second cross sectional area at a connection to the support structure (124, 224, 324), and wherein the second cross sectional area is larger than the first cross sectional area.

4. The additively manufactured element of claim 1, 2 or 3, wherein each of said fused supports (122, 222, 322) is under a spring tension.

5. The additively manufactured element of any preceding claim, wherein the article body (121, 221, 321), support structure (124, 224, 324), and fused supports (122, 222, 322) are comprised of an electrically conductive material.

6. The additively manufactured element of any preceding claim, wherein the article body (121, 221, 321), support structure (124, 224, 324), and fused supports (122, 222, 322) comprise a metal material.

7. The additively manufactured claim element of any preceding claim, wherein the fused supports (122, 222, 322) have a higher resistivity than the article body (121, 221, 321) and/or the support structure (124, 224, 324).

8. The additively manufactured element of any preceding claim, wherein at least one of the fused supports (122, 222, 322) in the plurality of fused supports (122, 222, 322) further comprises an additional material, relative to the support structure (124, 224, 324) and the article body (121, 221, 321).

9. The additively manufactured element of claim 8, wherein the additional material increases the resistivity of the at least one fused support (122, 222, 322).

10. A method (400) for removing an additively manufactured article body (121, 221, 321) from a support structure (124, 224, 324) comprising:
passing an electrical current through an additively manufactured element (120), thereby destroying a plurality of connectors (122, 222, 322) connecting a support structure (124, 224, 324) of the additively manufactured element (120) to an article body (121, 221, 321) of the additively manufactured element (120).

11. The method of claim 10, wherein passing the electrical current through the additively manufactured element (120), comprises contacting the support structure (124, 224, 324) with a first electrode while the article body (121, 221, 321) is contacting a neutral/ground.

12. The method of claim 10 or 11, further comprising maintaining the current for a duration, the duration being at least a length of time required to ensure breakage of the plurality of connectors (122, 222, 322).

13. The method of claim 10, 11, or 12, further comprising applying pressure to at least one of the support structure (124, 224, 324) and the article body (121, 221, 321), wherein, optionally, the pressure is applied simultaneous to passing the electrical current through the additively manufactured element (120).

14. The method of any of claims 10 to 13, further comprising additively manufacturing the additively manufactured element (120) by simultaneously manufacturing the support structure (124, 224, 324), the article body (121, 221, 321) and the connectors (122, 222, 322), and wherein the connectors (122, 222, 322) have a fused structure.

15. The method of claim 14, wherein manufacturing the connectors (122, 222, 322) comprises manufacturing a region of each connector (122, 222, 322) narrower than a remainder of the connector (122, 222, 322) and wherein, optionally, the region is at a joint between the connector (122, 222, 322) and the article body (121, 221, 321).
